# EUROPÄISCHE PATENTSCHRIFT

(11) **EP 4 244 041 B1**
(45) Veröffentlichungstag und Bekanntmachung des Hinweises auf die Patenterteilung: **15.05.2024**
(21) Anmeldenummer: 21830595.1
(22) Anmeldetag: 12.11.2021
(51) Int. Cl.: B29C 48/435, B29C 48/25, B29C 48/76, B29C 48/80

(54) **MULTIWELLEN-AUFBEREITUNGSEINHEIT FÜR KUNSTSTOFFSCHMELZEN**
MULTI-SHAFT PREPARATION UNIT FOR PLASTIC MELTS
UNITÉ DE TRAITEMENT À ARBRES MULTIPLES POUR MATIÈRES PLASTIQUES FONDUES

(30) Priorität: 13.11.2020 DE 102020130080
(43) Veröffentlichungstag der Anmeldung: 20.09.2023
(73) Patentinhaber: Gneuss GmbH, 32549 Bad Oeynhausen (DE)
(72) Erfinder: GNEUSS, Stephan, 32547 Bad Oeynhausen (DE); GNEUSS, Daniel, Charlotte, NC 28277 (US); GNEUSS, Detlef, 6919 Carabietta (CH)
(74) Vertreter: Tarvenkorn, Oliver
(86) Internationale Anmeldenummer: PCT/DE2021/100906
(87) Internationale Veröffentlichungsnummer: WO 2022/100792

(56) Entgegenhaltungen:
- WO-A1-2020/099684
- CN-A- 101 293 397
- DE-A1-102018 130 102
- US-A1- 2015 076 744

## Beschreibung

Die Erfindung betrifft eine Multiwellen-Aufbereitungsvorrichtung für Kunststoffschmelze mit den Merkmalen des Oberbegriffs des Anspruchs 1.

Für die Aufbereitung von Kunststoffschmelze, insbesondere Polyester, hat sich eine Multiwellen-Aufbereitungsvorrichtung in Form eines sog.Multirotationssystems (MRS) bewährt, das in WO 2003 033 240 A1 grundlegend beschrieben ist. Es enthält eine Extruderschnecke, die zwischen einer Einzugs- und Meteringzone zum Einziehen und Aufschmelzen des Kunststoffs und einer Austragszone eine sogenannte Polyrotationseinheit mit einer Rotorkörperwelle umfasst. Letztere besitzt einen gegenüber den anderen Zonen deutlich vergrößerten Durchmesser und außerdem mehrere rotierende Satellitenschnecken. Mit dem Multirotationssystem wird eine signifikante Erhöhung der Entgasungsleistung gegenüber Ein- und Doppelschneckensystem erreicht. Folglich kann die Verweilzeit der Schmelze in der Polyrotationseinheit sehr kurzgehalten werden. Der Füllgrad, also der Anteil des im Betrieb von Kunststoffschmelze eingenommenen Volumens im Verhältnis zu dem gesamten freien Volumen im Behandlungsraum, in dem die Rotorkörperwelle mit den Satellitenschnecken rotiert, ist konstruktiv über die Abstimmung von Durchmessern und Steigungen der Schnecken vorgegeben und wird auf einen bestimmten Anwendungsfall optimiert. Eine Änderung des Füllgrads wie der Verweilzeit ist im laufenden Betrieb allenfalls eingeschränkt möglich. Außerdem sieht das bekannte Antriebskonzept eine Antriebszone für die Satellitenschnecken vor, die innerhalb des für die Entgasung vorgesehenen Behandlungsraums liegt. Die aus der Meteringzone überführte Schmelze wird durch die Antriebszone hindurchgeführt. Einerseits kann der über die dort auftretende Scherung erfolgende Energieeintrag vorteilhaft sein, weil er die Homogenisierung der Kunststoffschmelze begünstigt. Andererseits ist eine hohe Antriebsleistung erforderlich, um die mit mehreren Zonen hintereinander ohnehin sehr lang ausgebildete Extruderschnecke samt der Satellitenschnecken von ihrem Ende her anzutreiben. Die Verarbeitung hochviskoser Kunststoffschmelzen in einem solchen Multirotationssystem hat daher Grenzen.

Bei einer in CN 101 293 397 A beschriebenen Multiwellen-Aufbereitungsvorrichtung ist kein externes Getriebe vorhanden. Alle Zahnräder liegen unmittelbar in dem Medium, das in der Aufbereitungsvorrichtung gefördert und behandelt wird. Damit ist gerade keine thermische Entkopplung möglich. Außerdem wirkt sich bei Kunststoffschmelzen die Scherung negativ aus, der der Kunststoff in der Antriebszone mit den Verzahnungen ausgesetzt ist. Weiterhin öffnet sich der Behandlungsraum so weit in Richtung des Antriebs, dass der rotierende Dichtring dort der heißen Kunststoffschmelze ausgesetzt ist. Ein Mehrwellenextruder gemäß DE 10 2006 052 610 A1 besitzt Satellitenschnecken, die ortsfest angeordnet sind, aber nicht Teil einer rotierenden Einheit sind. Die Behandlungseinheit und die Getriebeeinheit sind zwar voneinander abgesetzt. Damit wird jedoch kein Kühlzweck verfolgt. Eine Kühlung soll allein über Kühlkanäle erfolgen. Die Druckschriften WO 2020/099684 A1, DE 10 2018 130102 A1 und US 2015/076744 A1 offenbaren weitere Multiwellen-Aufbereitungseinheiten für Kunststoffschmelze.

Die Aufgabe der Erfindung besteht somit darin, eine Multiwellen-Aufbereitungsvorrichtung für Kunststoffschmelzen der eingangs genannten Art so zu verbessern, dass insbesondere auch hochviskose Kunststoffschmelzen gut verarbeitbar sind.

Die Lösung nach der vorliegenden Erfindung besteht in einer Multiwellen-Aufbereitungsvorrichtung mit den Merkmalen des Anspruchs 1.

Nach der Erfindung wird die Schmelze von einem ausgelagerten Aufschmelzextruder in den Behandlungsraum geführt, so dass die Rotorkörperwelle als Hauptrotorwelle, die den Rotorkörper trägt, in welchem die Satellitenschnecken gelagert sind, keine Einzugs- und Meteringzone besitzt.

Die Erfindung sieht für die Multiwellen-Aufbereitungsvorrichtung einen externen Antrieb vor, bei dem sowohl die zentrale Rotorkörperwelle wie auch jede einzelne Satellitenschnecke ein verlängertes rückwärtiges Wellenende besitzen, das aus dem Behandlungsraum herausgeführt ist. Zwischen einem den Behandlungsraum umschließenden Extrudergehäuse und einer außerhalb davon angeordneten Getriebeeinheit ist eine Trennvorrichtung vorgesehen, mit bzw. in der mögliche negative Einflüsse auf das Getriebe reduziert oder sogar kompensiert werden können:
- Stoffströme in Form von aus dem Extrudergehäuse austretenden Leckageströmungen werden in der Trennvorrichtung unterbrochen, so dass eine Verschmutzung des Getriebes mit Kunststoffschmelze auch in einem Störungsfall, bei dem sich im Behandlungsraum ein Druck aufbaut, ausgeschlossen ist.
- Fluchtungsfehler zwischen der Lagerung der jeweiligen vorderen Wellenenden im Extrudergehäuse und im Getriebe können durch in der Trennvorrichtung angeordnete Kupplungen ausgeglichen werden. Dies gilt ebenso für den Fall, dass die Satellitenschnecken keine vordere Lagerstelle im Extrudergehäuse bzw. auf der Extruderschneckenwelle haben, sondern frei in den Einschnitten auf der Rotorkörperwelle rotieren.
- Wärmeströme, die vom Behandlungsraum mittels Wärmeleitung über die in das Getriebe führenden Abschnitte der Rotorkörperwelle und der Satellitenschnecken fließen, können reduziert werden, insbesondere wenn die Trennvorrichtung mit einem Fluid durchströmt wird. Durch Auswahl geeigneter Kupplungen für die durch die Trennvorrichtung hindurch laufenden Wellenabschnitte kann der Wärmestrom ebenfalls gehemmt oder unterbrochen werden. Durch diese Maßnahmen kann die Getriebetemperatur unter 100°C gehalten werden.

Die Rotorkörperwelle besitzt an ihrer zur Trennvorrichtung gewandten Seite einen Dichtungs- und Führungsabschnitt. Zwischen diesem und der Extruderbohrung im Gehäuse ist ein Ringspalt gebildet, der hinsichtlich seiner radialen Spaltweite und seiner Ausdehnung in axialer Richtung so bemessen ist, dass dort etwas Kunststoffschmelze eindringen kann, um eine Schmierung zu gewährleisten. Über den Dichtungs- und Führungsabschnitt ist das hintere Ende der Rotorkörperwelle im Extrudergehäuse gelagert.

In dem Ringspalt ist wenigstens ein Dichtmittel vorgesehen, um zu verhindern, dass Kunststoffschmelze bis in die Trennvorrichtung laufen kann. Das Dichtmittel kann durch ein Rückfördergewinde und/oder einen temperaturbeständigen Wellendichtring gebildet sein. Der Dichtungs- und Führungsabschnitt bildet auch das Lager für die durch ihn hindurchlaufenden Satellitenschneckenwellen. Zwischen den jeweiligen Lagerbohrungen und den Satellitenschneckenwellen ist ebenfalls jeweils wenigstens ein Dichtmittel vorgesehen, um zu verhindern, dass Schmelze entlang der Satellitenschneckenwellen in die Trennvorrichtung läuft.

Die Rotorkörperwelle wird vorzugsweise mit fünf bis acht Satellitenschnecken bestückt, um je nach Baugröße eine alternierende Folge von Einschnitten, in denen jeweils eine Satellitenschnecke aufgenommen ist, und Abschnitten des Rotormantels, die mit einem Hauptschneckensteg versehen sind, zu erhalten.

An der Trennvorrichtung und/oder einem dazu benachbarten Endabschnitt der Multiwellen-Aufbereitungseinheit kann ein von einem Kühlmittel durchflossener Temperiermittelkanal vorgesehen sein, um die Trennvorrichtung mit ihrem Hohlraum zu kühlen und so den mittels Wärmeleitung über die jeweiligen Wellenabschnitte in die Getriebeeinheit geleiteten Wärmestrom zu reduzieren.

Die Erfindung wird nachfolgend mit weiteren vorteilhaften Ausgestaltungen und mit Bezug auf das in den Zeichnungen dargestellte Ausführungsbeispiel näher erläutert. Die Figuren zeigen im Einzelnen:
- Fig. 1: eine Multiwellen-Aufbereitungseinheit in seitlicher Ansicht;
- Fig. 2: die Multiwellen-Aufbereitungseinheit in perspektivischer Ansicht von der Rückseite her;
- Fig. 3: die Multiwellen-Aufbereitungseinheit in seitlicher Schnittansicht;
- Fig. 4: die Multiwellen-Aufbereitungseinheit in vergrößerter Schnittansicht; und
- Fig. 5: Getriebeeinheit und Trennvorrichtung in perspektivischer Ansicht.
- Fig. 6: Teile der Multiwellen-Aufbereitungseinheit und die Getriebeeinheit in perspektivischer Ansicht.

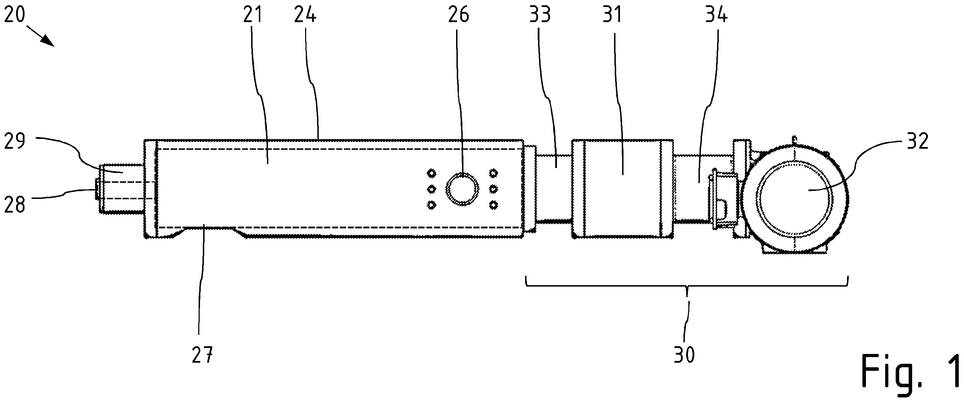

Eine Multiwellen-Aufbereitungseinheit 20 ist in Figur 1 in seitlicher Ansicht dargestellt. Diese besitzt ein Extrudergehäuse 24 mit einem umschlossenen Behandlungsraum 21 für die Kunststoffschmelze. Die aus einem externen Aufschmelzextruder zugeführte Kunststoffschmelze wird an einer peripheren Eintragsöffnung 26 im Gehäusemantel des Extrudergehäuses 24 eingeleitet und an einer ebenfalls peripher angeordneten Austragsöffnung 27 ausgeleitet. Die Austragsöffnung 27 ist bevorzugt an der Unterseite des Behandlungsraums 21 angeordnet, um in einer drucklosen Betriebsweise den Austrag mittels Schwerkraft zu erleichtern. An einem endseitigen Flansch 29 des Extrudergehäuses 24 ist ein Anschluss an einen Temperiermittelkanal 28 vorgesehen, der sich bis ins Innere einer in dem Behandlungsraum 21 rotierenden Rotorkörperwelle mit mehreren Satellitenschnecken erstreckt.

Schon an der äußeren Ansicht in Figur 1 wird deutlich, dass die Antriebseinheit 30 extern, also außerhalb des Extrudergehäuses 24 und insbesondere vollständig außerhalb eines zwischen der Eintragsöffnung 26 und der Austragsöffnung 27 gebildeten Fließwegs für die Kunststoffschmelze angeordnet ist. Ein Motor 32 wirkt über eine Kupplungseinheit 34 und eine Getriebeeinheit 31 auf die Rotorkörperwelle im Behandlungsraum 21. Zwischen der Getriebeeinheit 31 und der Rotorkörperwelle ist eine Trennvorrichtung 33 vorgesehen. Diese bewirkt eine Entkopplung eines vom Behandlungsraum 21 ausgehenden Fluid- und/oder Wärmestroms. Die Trennvorrichtung 33 isoliert und dichtet gegenüber dem Behandlungsraum 21 ab und führt zugleich die Wellenenden aller Wellen der Multiwellen-Aufbereitungseinheit 20 in Richtung des Getriebes 31 heraus.

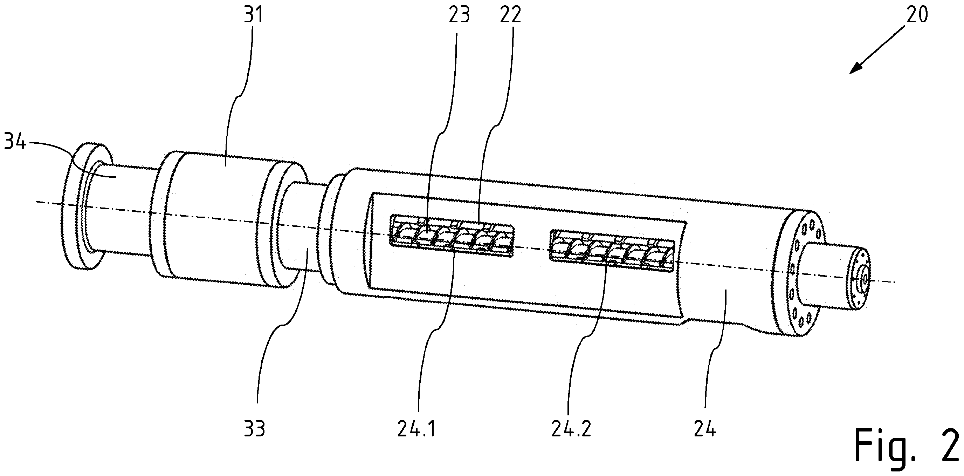

In Figur 2, welche eine perspektivische Ansicht auf eine Rückseite die Multiwellen-Aufbereitungseinheit 20 ist, ist die mit mehreren Satellitenschnecken 23 bestückte Rotorkörperwelle 22 erkennbar, die an Absaugöffnungen 24.1, 24.2 im Extrudergehäuse 24 vorbei rotiert. An die Absaugöffnungen 24.1, 24.2 schließt sich jeweils eine Absaugleitung einer Vakuumpumpe an. Für eine effektive Entgasung des Behandlungsraums erstrecken sich die Absaug-Gehäuseöffnungen 24.1, 24.2 gemeinsam über wenigstens 75% der axialen Länge des Behandlungsraums 21.

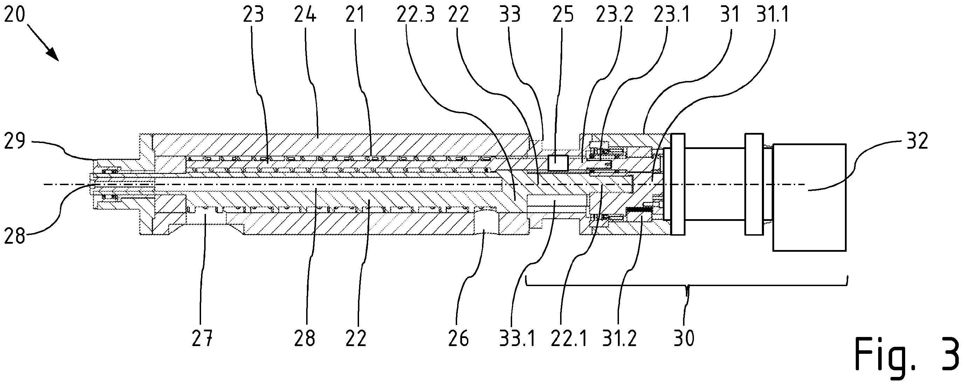

In Fig. 3 ist die Mehrwellen-Aufbereitungseinheit 20 mit Antriebseinheit 30 in seitlicher Schnittansicht dargestellt. Zum besseren Verständnis ist hier die in der Realität seitlich peripher angeordnete Eintragsöffnung 26 in die Schnittebene gedreht worden.

Im Behandlungsraum 21 des Extrudergehäuses 24 ist die Rotorkörperwelle 22 mit den Satellitenschnecken 23 drehbar gelagert. Eine in Strömungsrichtung gesehen vordere Lagerstelle der Rotorkörperwelle 22 ist im Bereich des Flansches 29 ausgebildet. Durch den dort mündenden Temperiermittelkanal 28 kann sie vorgeheizt werden, z.B. beim Anfahren bei Produktionsbeginn, aber auch gekühlt werden. Eine hintere Lagerstelle der Rotorkörperwelle 22 ist durch einen Dichtungs- und Führungsabsatz 22.3 gebildet.

Die notwendige Kühlleistung im System kann nach der Erfindung stark reduziert werden, weil der Antrieb der Satellitenschnecken 23 nicht, wie im Stand der Technik üblich, in einer Antriebszone erfolgt, welche durch eine im Behandlungsraum liegende Verzahnung an der Rotorkörperwelle 22 gebildet ist, sondern komplett in den Bereich jenseits der Trennvorrichtung 33 ausgelagert ist. Aufgrund der vollständigen Auslagerung des Antriebs für alle Wellen wird ein Energieeintrag verhindert, der bei einer internen Antriebszone durch die dort stets auftretende Scherung der Schmelze erfolgen würde.

Nach der Erfindung ist jede Satellitenschnecke 23 nach hinten hin mit einem Wellenabsatz 23.2 verlängert und läuft in einem Ritzel 23.1 in einem Getriebe 31 aus. Das Getriebe 31 umfasst im Wesentlichen einen Zahnring 31.2 mit Innenverzahnung und einen Getrieberotorkörper 31.1, der zum einen mit einem Antriebsende 22.1 der Rotorkörperwelle 22 drehmomentschlüssig verbunden ist und an dem zum anderen für jede Satellitenschnecke 23 eine Lagerstelle ausgebildet ist. Die Satellitenschnecken 23 greifen jeweils mit ihrem Ritzel 23.1 in den Zahnring 31.2 ein und werden darüber angetrieben, wenn die Rotorkörperwelle 22 angetrieben wird und rotiert.

Die Trennvorrichtung 33 umfasst einen Hohlraum 33.1, durch welchen die Wellenenden der Rotorkörperwelle 22 und der Satellitenschnecken 23 hindurchgeführt sind. Die Wellenenden 23.2 der Satellitenschnecken 23 sind im dargestellten Ausführungsbeispiel innerhalb der Trennvorrichtung 33 jeweils geteilt, wobei die beiden Wellenabschnitte jeweils mit einem Kupplungselement 25, das innerhalb des Hohlraums 33.1 angeordnet ist, gekoppelt sind. Dadurch können etwaige Fluchtungsfehler zwischen dem jeweiligen im Extrudergehäuse 24 befindlichen Teil der Satellitenschnecke 23 und deren Enden, die in dem Getrieberotorkörper 31.1 gelagert sind, ausgeglichen werden. Zugleich kann die Wärmeleitung ins Getriebe 31 reduziert werden.

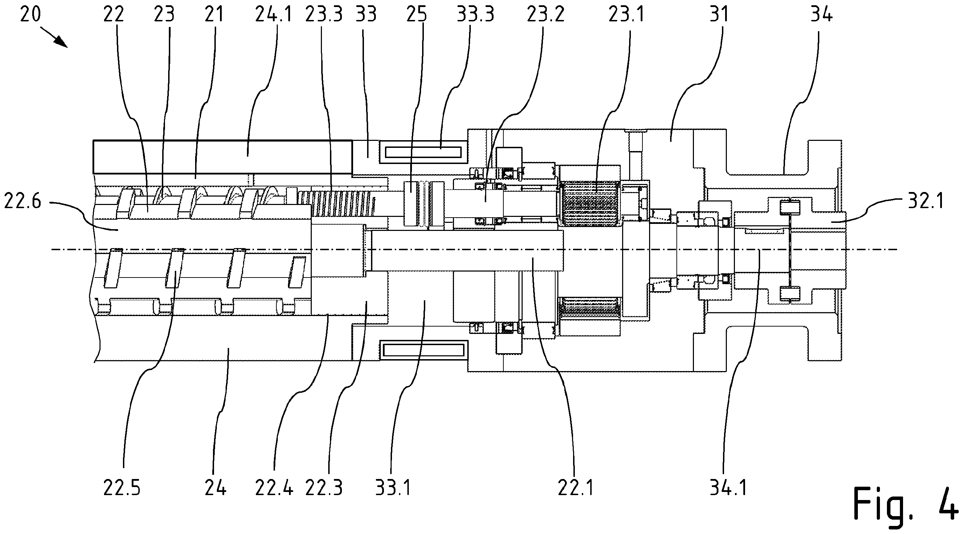

In Figur 4 ist die Schnittansicht aus Figur 3 noch einmal vergrößert, um den rückwärtigen Bereich des Extrudergehäuses 24 und die um die Trennvorrichtung 33 verlängerte Getriebeeinheit 31 im Detail darzustellen. Die Schnittebene ist hier horizontal, so dass die Schnittansicht auch einen Teil der seitlichen Absaugöffnung 24.1 umfasst.

Links in Figur 4 ist ein Abschnitt der Rotorkörperwelle 22 sichtbar. Sie besitzt einen Hauptschneckensteg 22.5, dessen Außendurchmesser ungefähr dem Innendurchmesser des zylindrischen Hohlraums im Extrudergehäuse 24 entspricht, der den Behandlungsraum 21 bildet. Auf der Rotorkörperwelle 22 sind über den Umfang verteilt mehrere tiefe Einschnitte eingebracht, die jeweils eine Aufnahmenut 22.6 für eine Satellitenschnecke 23 bilden. Zur besseren Darstellung ist in derjenigen Aufnahmenut 22.6, die in der Ansicht nach Figur 4 zum Betrachter zeigt, keine Satellitenschnecke eingezeichnet.

Jeder Wellenabsatz 23.2 einer Satellitenschnecke23 ist in dem dargestellten Ausführungsbeispiel zunächst durch den Dichtungs- und Führungsabschnitt 22.3 der Rotorwelle 22 am rückwärtigen Ende des Extrudergehäuses 24 und dann durch den drucklosen Hohlraum 33.1 in der Trennvorrichtung 33 geführt. An den durch den Dichtungs- und Führungsabschnitt 22.3 geführten Wellenabsätzen 23.2 der Satellitenschnecken 23 ist jeweils ein Rückfördergewinde 23.4 ausgebildet. Dessen Orientierung ist so gewählt, dass bei dem jeweiligen im Betrieb gegebenen Drehsinn von Rotorkörperwelle 22 und Satellitenschnecken 23 eine Förderung zum Behandlungsraum 21, in Richtung der Austragsöffnung, bewirkt wird, also in einer von der Getriebeeinheit 31 weg weisenden Förderrichtung. Der Dichtungs- und Führungsabsatz 22.3 besitzt an seinem Außenumfang ebenfalls wenigstens ein Rückfördergewinde 22.4, wobei die Orientierung wieder so mit dem Drehsinn der Rotorkörperwelle 22 im Betrieb abgestimmt ist, dass die Förderung in Richtung der Austragsöffnung erfolgt.

Da in den meisten Betriebszuständen ein geringer Füllgrad in der Mehrwellen-Aufbereitungseinheit 20 vorgegeben ist und an den Absaugöffnungen ein Vakuum anliegt, steht der Behandlungsraum 21 in der Regel nicht unter einem Innendruck. Der Dichtungs- und Führungsabschnitt 22.3 mit dem Rückfördergewinde 22.4 wie auch die Wellenabsätze 23.2 mit Rückfördergewinden 22.4 müssen daher im Normalbetrieb keine Druckabdichtung leisten, sondern dienen als Sicherheit für unvorhergesehene Betriebszustände und vermeiden ansonsten eine allgemeine Verschleppung von Kunststoffschmelze über die Trennvorrichtung 33 in die Getriebeeinheit 31.

Außen am Gehäuse der Trennvorrichtung 33 ist ein von einem Kühlmittel durchflossener Temperiermittelkanal 33.3 vorgesehen.

An der anderen Seite der Getriebeeinheit 31 ist eine Kupplungseinheit 34 mit einer Wellenkupplung 34.1 vorgesehen, durch welche ein Getrieberotorkörper 31.1 mit einer Abtriebswelle 32.1 des Motors 32 verbunden ist.

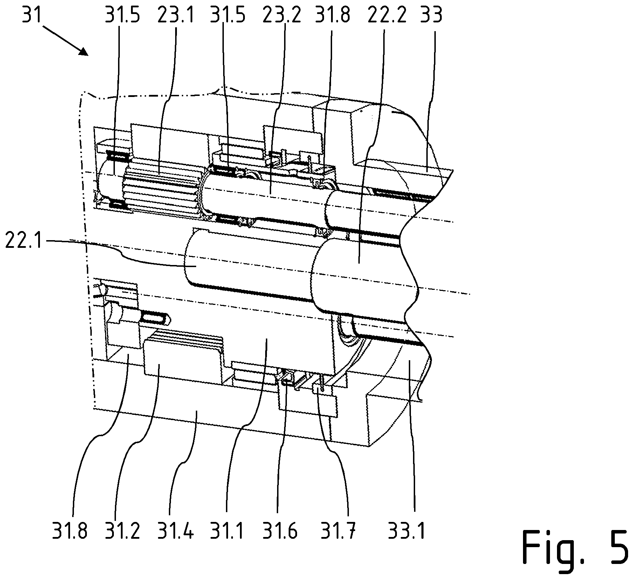

Die Getriebeeinheit 31 ist in Figur 5 perspektivisch dargestellt. Die Wellenabsätze 22.2, 23.2 der Rotorkörperwelle und der Satellitenschnecken laufen durch den Hohlraum 33.1 der Trennvorrichtung 33 bis in den Getrieberotorkörper 31.1. Ein Antriebswellenende 22.1 der Rotorkörperwelle 22 ist mit einer Außenverzahnung versehen, die in eine entsprechend verzahnte Aufnahmebohrung im Zentrum des Getrieberotorkörpers 31.1 eingreift.

Der Getrieberotorkörper 31.1 und die Rotorkörperwelle 22 sind damit drehmomentsteif gekoppelt. Die Satellitenschnecken 23 sind mit ihrem Wellenabsatz 23.2 in Wälzlagern 31.5 in dem Getrieberotorkörper 31.1 gelagert, und zwar beidseits des fest in einem Getriebegehäuse 31.4 befestigten Zahnrings 31.2. Zwischen den Lagerstellen besitzen die Satellitenschnecken 23 jeweils ein Ritzel 23.1, das in den Zahnring 31.2 eingreift. Mit einer Rotation des Getrieberotorkörpers 31.1 gegenüber dem Getriebegehäuse 31.4 werden daher die Satellitenschnecken 23 gegenläufig zur Rotorkörperwelle 22 angetrieben, wobei sich deren Drehzahl aus den Teilkreisdurchmessern der Verzahnungen von Ritzel 23.1 und Zahnring 31.2 ergibt und vorzugsweise etwa bei dem 3fachen der Drehzahl des Getrieberotorkörpers 31.1 liegt. Die Satellitenschnecken 23 werden somit in dieser Ausführungsform allein durch die Innenverzahnung des Zahnrings 31.2 angetrieben, greifen aber nicht in eine weitere Außenverzahnung am Getrieberotorkörper 31.1 ein. Sie werden also nicht durch ein Sonnenrad angetrieben; damit stellt die Getriebeeinheit 31 kein Planetengetriebe dar.

Am Außenumfang des Getrieberotorkörper 31.1 sind mehrere Dichtringe 31.6, 31.7 vorgesehen, um den ölgefüllten Innenraum 31.8 der Getriebeeinheit 31 gegenüber dem Hohlraum 33.1 der Trenneinheit 33 abzudichten. Um die Durchgangsbohrungen für die Wellenabsätze 23.2 der Satellitenschnecken 23 im Getrieberotorkörper 31.1 gegenüber dem Hohlraum 33.1 der Trenneinheit 33 abzudichten, sind Wellendichtringe 31.8 vorgesehen.

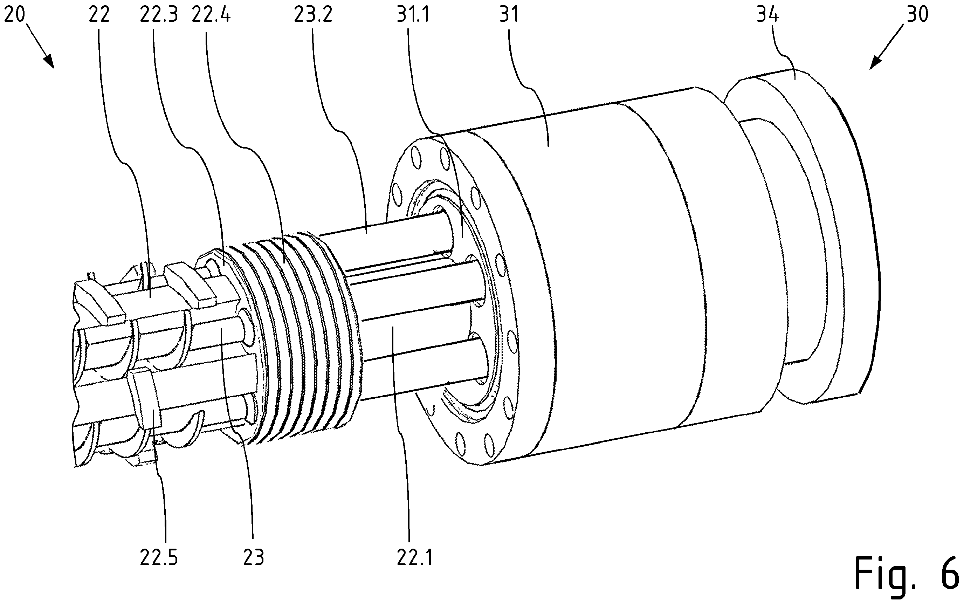

Figur 6 zeigt einen Blick auf einen hinteren Bereich der Rotorkörperwelle 22 und die Getriebeeinheit 31 dahinter. Das Extrudergehäuse und das Gehäuse der Trennvorrichtung sind nicht dargestellt. Die Rotorkörperwelle 22 besitzt an ihrer zur Getriebeeinheit 31 ist gewandten Seite einen Dichtungs- und Führungsabschnitt 22.3, der an seiner Außenseite mit einem Rückfördergewinde 22.4 versehen ist. Zwischen dem Dichtungs- und Führungsabschnitt 22.3 und der Extruderbohrung im Gehäuse ist ein Ringspalt gebildet, der hinsichtlich seiner radialen Spaltweite und seiner Ausdehnung in axialer Richtung so lang bemessen ist, dass dort etwas Kunststoffschmelze eindringen kann, um eine Schmierung zu gewährleisten. Über den Dichtungs- und Führungsabschnitt 22.4 ist das hintere Ende der Rotorkörperwelle 22 im Extrudergehäuse gelagert. Der Dichtungs- und Führungsabschnitt 22.4 bildet mit mehreren auf einem Teilkreis angeordneten Bohrungen jeweils ein Lager für die hindurchlaufenden Satellitenschneckenwellenabsätze 23.2.

### Bezugszeichenliste

- 20: Multiwellen-Aufbereitungseinheit
- 21: Behandlungsraum

- 22: Rotorkörperwelle
- 22.1: Antriebsende
- 22.2: Wellenabsatz
- 22.3: Dichtungs- und Führungsabschnitt
- 22.4: Rückfördergewinde
- 22.5: Hauptschneckensteg
- 22.6: Aufnahmenut

- 23: Satellitenschnecken
- 23.1: Ritzel
- 23.2: Wellenabsatz
- 23.4: Rückfördergewinde

- 24: Extrudergehäuse
- 24.1,24.2: Absaugöffnungen
- 25: Kupplungselement
- 26: Eintragsöffnung
- 27: Austragsöffnung
- 28: Temperiermittelkanal
- 29: Flansch

- 30: Antriebseinheit

- 31: Getriebeeinheit
- 31.1: Getrieberotorkörper
- 31.2: Zahnring
- 31.4: Getriebegehäuse
- 31.5: Wälzlager
- 31.6, 31.7: Dichtringe
- 31.8: Wellendichtring
- 32: Motor
- 32.1: Abtriebswelle
- 33: Trennvorrichtung
- 33.1: Hohlraum
- 33.3: Temperiermittelkanal
- 34: Kupplungseinheit
- 34.1: Wellenkupplung

## Patentansprüche

1. Multiwellen-Aufbereitungseinheit (20) für Kunststoffschmelze, wenigstens umfassend ein Extrudergehäuse (24), das in seinem Inneren einen umschlossenen Behandlungsraum (21) für Kunststoffschmelze aufweist, und wenigstens eine im Behandlungsraum (21) rotierbar gelagerte Rotorkörperwelle (22) mit mehreren Aufnahmenuten (22.5), in denen jeweils eine Satellitenschnecke (23) gelagert ist, wobei die Multiwellen-Aufbereitungseinheit (20) eine Antriebseinheit (30) besitzt, bei der außerhalb des Extrudergehäuses (24), zwischen einem Antriebsmotor (32) und dem Behandlungsraum (21), eine Getriebeeinheit (31) angeordnet ist, welche mit den aus dem Behandlungsraum (21) des Extrudergehäuse (24) herausgeführten Antriebswellenabsätze (22.2, 23.2) der Rotorkörperwelle (22) und der Satellitenschnecken (23) verbunden ist, und -
- dass die Antriebswellenenden (22.2, 23.2) der Rotorkörperwelle (22) und der Satellitenschnecken (23) jeweils durch Bohrungen in einem den rückwärtigen Teil des Behandlungsraums (21) abschließenden Dichtungs- und Führungskörper (22.3) an der Rotorkörperwelle (22) geführt sind,
**dadurch gekennzeichnet,**
**dass** zwischen dem Extrudergehäuse (24) und der Getriebeeinheit (31 ) eine Trennvorrichtung (33) zur Entkopplung eines vom Behandlungsraum (21 ) ausgehenden Fluid- und/oder Wärmestroms vorgesehen ist, durch welche die jeweiligen Antriebswellenabsätze (22.2, 23.2) der Rotorkörperwelle (22) und
der Satellitenschnecken (23) hindurchgeführt sind, wobei die Antriebswellenabsätze (22.2, 23.2) der Rotorkörperwelle (22) und der Satellitenschnecken (23) durch wenigstens einen Hohlraum (33.1 ) in der Trennvorrichtung (33) hindurchgeführt sind.

2. Multiwellen-Aufbereitungseinheit (20) nach Anspruch 1, **dadurch gekennzeichnet, dass** an dem zu dem Hohlraum (33.1) gewandten Ende des Extrudergehäuses (24) und/oder in einer Wandung der Trennvorrichtung (30) wenigstens ein Temperiermittelkanal (33.1) ausgebildet ist, der von einem Temperierfluid durchströmbar ist.

3. Multiwellen-Aufbereitungseinheit (20) nach Anspruch 1 oder 2, **dadurch gekennzeichnet, dass** die Antriebswellenabsätze (23.2) der Satellitenschnecken (23) in dem Hohlraum (33.1) jeweils in zwei Abschnitte geteilt sind, welche jeweils mittels eines Kupplungselements (25) miteinander verbunden sind.

4. Multiwellen-Aufbereitungseinheit (20) nach Anspruch 3, **dadurch gekennzeichnet, dass** die Kupplungselemente (25) als Metallbalgkupplung ausgebildet sind.

5. Multiwellen-Aufbereitungseinheit (20) nach einem der vorhergehenden Ansprüche 1 bis 4, **dadurch gekennzeichnet, dass** die Antriebswellenabsätze (23.2) der Satellitenschnecken (23) zumindest über einen Teil ihres in den jeweiligen Bohrungen des Dichtungs- und Führungskörpers (22.3) befindlichen Längenabschnitts mit einem Rückfördergewinde (23.4) versehen sind.

6. Multiwellen-Aufbereitungseinheit (20) nach einem der vorhergehenden Ansprüche 1 bis 4, **dadurch gekennzeichnet, dass** Dichtungs- und Führungskörper (22.3) an der Rotorkörperwelle (22) zumindest über einen Teil seiner Länge mit einem Rückfördergewinde (22.4) versehen sind.

7. Multiwellen-Aufbereitungseinheit (20) nach einem der vorhergehenden Ansprüche, **dadurch gekennzeichnet,**
- **dass** die Rotorkörperwelle (22) mit einem Getrieberotorkörper (31.1) der Getriebeeinheit (31) verbunden ist und
- **dass** die Antriebswellenabsätze (23.2) der Satellitenschnecken (23) in dem Getrieberotorkörper (31.1) drehbar gelagert sind, wobei die endseitig jeweils mit einem Ritzel (23.1) versehenen Satellitenschnecken (23) nur in eine feststehende Innenverzahnung (31.2) eingreifen, welche den Getrieberotorkörper (31.1) umgibt.

8. Multiwellen-Aufbereitungseinheit (20) nach einem der vorhergehenden Ansprüche, **dadurch gekennzeichnet, dass** am Extrudergehäuse (24) eine nach unten weisend Austrags-Gehäuseöffnung (27) vorgesehen ist.

9. Multiwellen-Aufbereitungseinheit (20) nach einem der vorhergehenden Ansprüche, **dadurch gekennzeichnet, dass** am Gehäuse der Multiwellen-Aufbereitungsvorrichtung (20) wenigstens eine Absaug-Gehäuseöffnung (24.1, 24.2) vorgesehen ist, an die eine Vakuumpumpe angeschlossen ist, wobei sich die eine Absaug-Gehäuseöffnung oder mehrere Absaug-Gehäuseöffnungen (24.1, 24.2) gemeinsam über wenigstens 75% der axialen Länge des Behandlungsraums (21) erstrecken.

## Claims

1. Multi-shaft preparation unit (20) for plastic melt, at least comprising an extruder housing (24) which in its interior has an enclosed treatment chamber (21) for plastic melt, and at least one rotor body shaft (22) which is rotatably mounted in the treatment chamber (21) and has a plurality of receptacle grooves (22.5), one satellite screw (23) being mounted in each of the latter; wherein the multi-shaft preparation unit (20) possesses a drive unit (30) in which a gearbox unit (31), which is connected to the drive shaft shoulders (22.2, 23.2) of the rotor body shaft (22) that are guided out of the treatment chamber (21) of the extruder housing (24) and of the satellite screws (23), is disposed outside the extruder housing (24), so as to be between a drive motor (32) and the treatment chamber (21), and that the drive shaft ends (22.2, 23.2) of the rotor body shaft (22) and of the satellite screws (23) are in each case guided through bores in a sealing and guiding body (22.3) on the rotor body shaft (22) that terminates the rear part of the treatment chamber (21), **characterized in that** provided between the extruder housing (24) and the gearbox unit (31) is a separation device (33) for decoupling a flow of fluid and/or heat which emanates from the treatment chamber (21) and through which the respective drive shaft shoulders (22.2, 23.2) of the rotor body shaft (22) and of the satellite screws (23) are guided, wherein the drive shaft shoulders (22.2, 23.2) of the rotor body shaft (22) and of the satellite screws (23) are guided through at least one cavity (33.1) in the separation device (33).

2. Multi-shaft preparation unit (20) according to Claim 1, **characterized in that** at least one temperature-control medium duct (33.1), which is able to be passed through by a flow of temperature-control fluid, is formed on that end of the extruder housing (24) that faces the cavity (33.1) and/or in a wall of the separation device (30).

3. Multi-shaft preparation unit (20) according to Claim 1 or 2, **characterized in that** the drive shaft shoulders (23.2) of the satellite screws (23) in the cavity (33.1) are in each case divided into two portions which are in each case connected to one another by means of a coupling element (25).

4. Multi-shaft preparation unit (20) according to Claim 3, **characterized in that** the coupling elements (25) are designed as a metal bellows coupling.

5. Multi-shaft preparation unit (20) according to one of the preceding Claims 1 to 4, **characterized in that** the drive shaft shoulders (23.2) of the satellite screws (23) are provided with a return conveying thread (23.4) at least over part of the length portion of said drive shaft shoulders (23.2) that is located in the respective bores of the sealing and guiding body (22.3).

6. Multi-shaft preparation unit (20) according to one of the preceding Claims 1 to 4, **characterized in that** the sealing and guiding body (22.3) on the rotor body shaft (22) is provided with a return conveying thread (22.4) at least over part of the length of said sealing and guiding body (22.3).

7. Multi-shaft preparation unit (20) according to one of the preceding claims, **characterized in that**
- the rotor body shaft (22) is connected to a gearbox rotor body (31.1) of the gearbox unit (31); and
- the drive shaft shoulders (23.2) of the satellite screws (23) are rotatably mounted in the gearbox rotor body (31.1), wherein the satellite screws (23) that are in each case provided with a pinion (23.1) on the end engage only in one stationary internal toothing (31.2) which surrounds the gearbox rotor body (31.1).

8. Multi-shaft preparation unit (20) according to one of the preceding claims, **characterized in that** a downward-pointing delivery housing opening (27) is provided on the extruder housing (24).

9. Multi-shaft preparation unit (20) according to one of the preceding claims, **characterized in that** at least one suction housing opening (24.1, 24.2) which is connected to a vacuum pump is provided on the housing of the multi-shaft preparation device (20), wherein the one suction housing opening, or the plurality of suction housing openings (24.1, 24.2) conjointly, extends/extends across at least 75% of the axial length of the treatment chamber (21).

## Revendications

1. Unité de traitement (20) à arbres multiples pour matière plastique fondue, comprenant au moins un boîtier d'extrudeuse (24) qui présente à l'intérieur de lui un espace de traitement fermé (21) pour la matière plastique fondue, et au moins un arbre (22) de corps de rotor monté de manière rotative dans l'espace de traitement (21) et présentant plusieurs rainures de réception (22.5) dans chacune desquelles est montée une vis sans fin satellite (23),
dans laquelle
l'unité de traitement (20) à arbres multiples présente une unité d'entraînement (30), une unité de transmission (31) étant disposée à l'extérieur du boîtier d'extrudeuse (24), entre un moteur d'entraînement (32) et l'espace de traitement (21), laquelle est reliée à des talons (22.2, 23.2) d'arbre d'entraînement de l'arbre (22) de corps de rotor et des vis sans fin satellites (23), qui sortent de l'espace de traitement (21) du boîtier d'extrudeuse (24), et
les extrémités (22.2, 23.2) d'arbre d'entraînement de l'arbre (22) de corps de rotor et des vis sans fin satellites (23) sont chacune guidées à travers des alésages ménagés dans un corps (22.3) d'étanchéité et de guidage fermant la partie arrière de l'espace de traitement (21) sur l'arbre (22) de corps de rotor,
**caractérisée**
**en ce qu'**il est prévu entre le boîtier d'extrudeuse (24) et l'unité d'engrenage (31) un dispositif de séparation (33) pour le découplage d'un flux de fluide et/ou de chaleur provenant de l'espace de traitement (21), à travers lequel les talons (22.2, 23.2) d'arbre d'entraînement respectifs de l'arbre (22) de corps de rotor et des vis sans fin satellites (23) sont guidés, les talons (22.2, 23.2) d'arbre d'entraînement de l'arbre (22) de corps de rotor et des vis sans fin satellites (23) étant guidés à travers au moins un espace creux (33.1) aménagé dans le dispositif de séparation (33).

2. Unité de traitement (20) à arbres multiples selon la revendication 1, **caractérisée en ce qu'**à l'extrémité du boîtier d'extrudeuse (24) tournée vers l'espace creux (33.1) et/ou dans une paroi du dispositif de séparation (30) est formé au moins un canal d'agent (33.1) de régulation de température qui est apte à être traversé par un fluide de régulation de température.

3. Unité de traitement (20) à arbres multiples selon la revendication 1 ou la revendication 2, **caractérisée en ce que** les talons (23.2) d'arbre d'entraînement des vis sans fin satellites (23) sont respectivement divisés en deux sections dans l'espace creux (33.1), lesquelles sont chacune reliées entre elles au moyen d'un élément de couplage (25).

4. Unité de traitement (20) à arbres multiples selon la revendication 3, **caractérisée en ce que** les éléments de couplage (25) sont conçus sous la forme d'un accouplement à soufflet métallique.

5. Unité de traitement (20) à arbres multiples selon l'une des revendications précédentes 1 à 4, **caractérisée en ce que** les talons (23.2) d'arbre d'entraînement des vis sans fin satellites (23) sont pourvus d'un filetage (23.4) de transport en retour sur au moins une partie de leur section de longueur située dans les alésages respectifs du corps (22.3) d'étanchéité et de guidage.

6. Unité de traitement (20) à arbres multiples selon l'une des revendications précédentes 1 à 4, **caractérisée en ce que** le corps (22.3) d'étanchéité et de guidage sur l'arbre du corps de rotor (22) est pourvu, sur au moins une partie de sa longueur, d'un filetage (22.4) de transport en retour.

7. Unité de traitement (20) à arbres multiples selon l'une des revendications précédentes, **caractérisée**
- **en ce que** l'arbre (22) de corps de rotor est relié à un corps (31.1) de rotor de transmission de l'unité de transmission (31) et
- **en ce que** les talons (23.2) d'arbre d'entraînement des vis sans fin satellites (23) sont montés rotatifs dans le corps (31.1) de rotor de transmission, les vis sans fin satellites (23), pourvues chacune d'un pignon (23.1) à leurs extrémités, s'engrenant uniquement dans une denture intérieure fixe (31.2) qui entoure le corps (31.1) de rotor de transmission.

8. Unité de traitement (20) à arbres multiples selon l'une des revendications précédentes, **caractérisée en ce qu'**une ouverture (27) de boîtier de décharge orientée vers le bas est prévue sur le boîtier de l'extrudeuse (24) .

9. Unité de traitement (20) à arbres multiples selon l'une des revendications précédentes, **caractérisée en ce que**, sur le boîtier du dispositif (20) de traitement à plusieurs arbres, il est prévu au moins une ouverture de boîtier (24.1, 24.2) d'aspiration, à laquelle est raccordée une pompe à vide, l'ouverture de boîtier d'aspiration ou plusieurs ouvertures de boîtier (24.1, 24.2) d'aspiration s'étendant ensemble sur au moins 75 % de la longueur axiale de l'espace de traitement (21).
